# EUROPEAN PATENT APPLICATION

(11) **EP 1 978 684 A1**
(43) Date of publication of application: **08.10.2008**
(21) Application number: 07007217.8
(22) Date of filing: 05.04.2007
(51) Int. Cl.: H04L 12/56

(54) **Handover method wireless packet transceiving equipment data exchange system**

(71) Applicant: Nokia Siemens Networks Oy, 02610 Espoo (FI)
(72) Inventor: Punz, Gottfried Dr., 1080 Wien (AT)
(74) Representative: Bruglachner, Thomas E.

(57) **Abstract**

A method for making a handover of a wireless packet transceiving equipment from a current to a target access network of a packet routing core network, comprises
(a) the following steps performed while the equipment is linked to the current access network:
(a1) collecting in the network second information about the target access network, the second information being network layer information,
(a2) preparing in the network handover with reference to the second information,

(b) the step of switching over the link of the wireless equipment from the current to the target access network,
(c) the following step performed while the equipment is linked to the target access network:
(c1) sending third information from the equipment to the target access network, and
(c2) completing on the side of the target access network and the core network handover with reference to the third information.

## Description

The invention relates to a method for making an IP layer handover, to a wireless packet transceiving equipment and to a data exchange system according to the preamble of the independent claims.

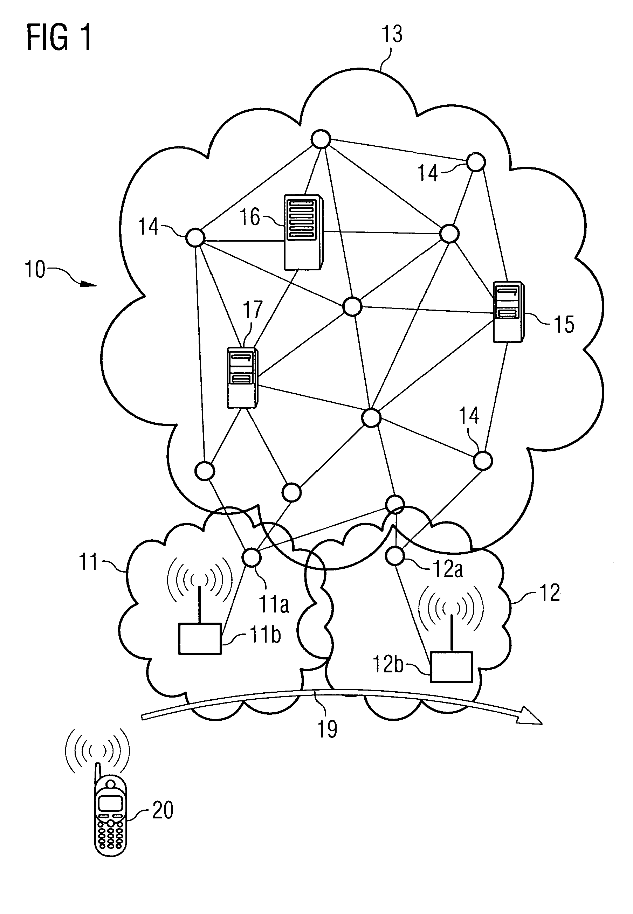

In broader terms, the invention relates to managing the hand-over of a wireless equipment 20 from a current access network to a target access network. The situation that the invention deals with is shown in Fig. 1. 10 is the collection of networks comprising access networks 11 and 12 and a core network 13. 20 is a wireless equipment. The arrow 19 indicates movement of the wireless equipment 20 such that it is initially within the reach of a current access network 11 and will come in the reach of a target access network 12.

Both access networks 11, 12 are IP based but do not always have the same properties. Rather, they may be heterogenous, i. e. qualitatively or quantitatively different. Such differences must be properly dealt with when organizing a handover, particularly during ongoing data transmission .

Quantitative differences in the sense of this specification between access networks may for example be support of different system versions (such as IPv4 supported by the one access network and IPv6 supported by the other access network), different available bandwidths, or the like.

Qualitative differences may for example be that a current access network is a local net such as wLAN, for example connected to a local router, whereas the other access network is a regular wide area mobile access (GPRS/UMTS/Evolved UMTS in the future). It may for example be that a user has an ongoing session starting in the premises and within the reach of a wLAN of an employer , but leaves the reach of the wLAN during the ongoing session and thus will require wide area mobile access once he is out of the reach of the wLAN. In this scenario the local router is further connected to the core network 13 of the wide area mobile operator.

A proper management of a handover from a current to a target access network requires, amongst others, various steps and related signalings:
- Authentication, authorization, accounting ("AAA"): it must be assured that the handover properly deals with access permission, accounting (debiting) and security issues.
- Quality of service ("QoS"): since quality of service may be different between different access networks, it must be assured that the situation during the handover is as far as possible selectable or foreseeable, and possibly adjustable such that quality of service is sufficient to what is required by the wireless equipment (wireless equipment). This may include reservation of resources.
- Mobility handling: when the wireless equipment is handed over from the one access network to the other access network, routing must be changed, etc. This must be organized and initiated.

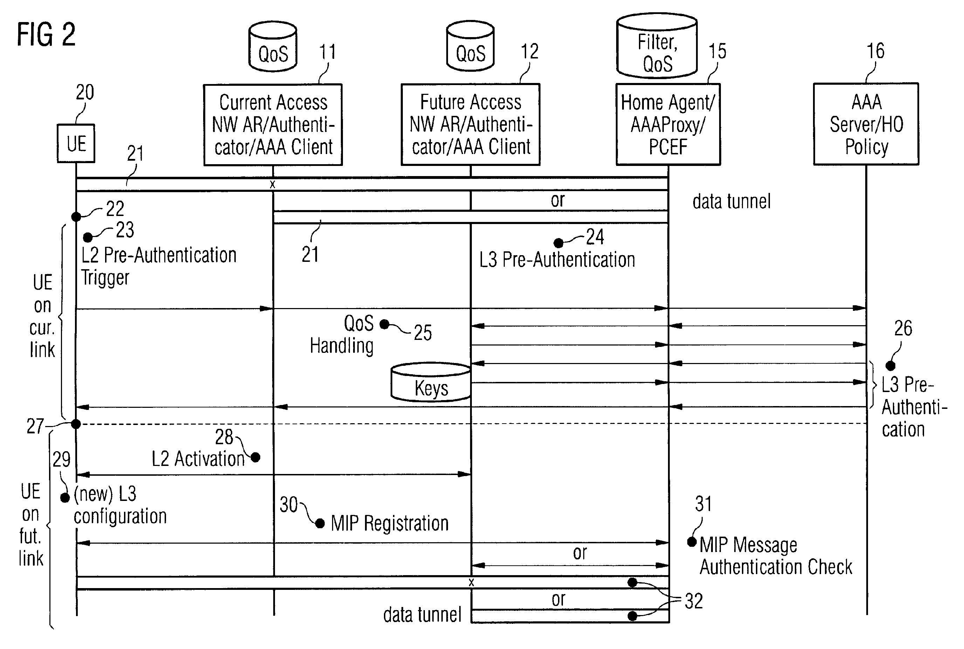

In order to deal with the above mentioned aspects, the state of the art handling is as shown in Fig.2. In Fig.2, time expires from top to bottom. 20 is the wireless equipment, for example a user equipment ("UE") such as a laptop or a PDA with wireless interface.

Generally in this specification, same reference numerals relate to same entities. 15 is a node in the core network 13 and acts as a home agent and an AAA proxy and as a policy and a charging enforcement function (PCEF). 16 is also a node in the core network and is an AAA server and may have also a handover policy control function. Deviations from this colocation of functionality may be found, e.g. the handover policy control function could be separate from the AAA Server.

14 are network routers. The communication is based on IP packet routing. The core network may run IPv4 and/or IPv6 on the network layer (OSI-model).

In Fig. 2, the current handover process between heterogeneous access networks is shown. In case of Client MIP a tunnel is already established between the user equipment 20 and home agent 15 for properly routing data. Alternatively, in the case that Proxy MIP is employed the data tunnel reaches from the home agent 15 to the access router 11a in the source access network (which then acts as the Proxy MIP Agent). These tunnels are established as a result of previous steps (not shown here) and indicated by 21.

In a step 22, the wireless equipment 20 becomes, through usual techniques, aware of the fact that a handover to a target access network becomes necessary (signal monitoring, signal strength evaluation, navigation) and obtains also some information about the target access network, gained again through known technology such as monitoring beacon signals of neighbouring base stations or alike.

In step 23, the wireless equipment sends through the current access network to the authenticator in node 11a a pre-authentication trigger on layer 2 level (data link layer in the OSI-model), which is forwarded and encapsulated in layer 3 message to the AAA proxy function in 15. This information given, the AAA proxy function 15 initiates pre-authentication (step 24) by contacting the AAA server 16. This entity may now also initiate quality of service handling and negotiation (step 25) in relation to the target access network 12.

Here, the HO policy control function (assumed to be co-located with AAA server 16) may for example request resources necessary for maintaining quality of service. Further, in the pre-authentication step, the AAA server 16 may check authorization of the requesting wireless equipment 20 for the target access network and may optionally deny or restrict handover. Quality of service handling may intermittently be made and may involve allocating required resources or negotiating the wireless equipment down to a lower quality of service, with potential consequences for charging. The result of this all is a pre-authentication (step 26).

This is communicated to the target access network 12, the AAA proxy in 15, the AAA server 16, and the wireless equipment 20. The measures mentioned so far involve also key provision and key distribution for the subsequent registration and authentication under access through a radio link to the target access network.

In step 27, the wireless equipment switches its radio link over from the current access network to the target access network. This is a layer 2 measure but does not automatically involve layer 3 changes. This will be made by the subsequent measures, as follows:

In step 28, the wireless equipment 20 associates with the target access network through some kind of activation message (details depend on the L2 technology). This message may include layer 2 information, such as a MAC-address for identifying the wireless equipment 20 in order to allow security and other checks.

Further, in step 29 the user equipment configures its layer 3 mobility handling (in the OSI-model, such as IP, MIP) for the target access network by building a care-of-address and activating it. This allows to initiate on the network side, particularly in the core network 13, the layer 3 modifications and settings, such as the registration under MIP (mobile internet protocol (step 30).

Such a MIP registration needs to be authenticated (step 31), and if it is found correct, the data tunnels are adjusted to the new situation (step 32), particularly by directing them to, or guiding them through the target access network.

The current handover procedure has various disadvantages: it suffers from signalling overhead in general (total amount of signalling messages) and especially in the time critical phase after the old L2 link has been dropped. When the link to the target access network is established, a complete MIP signalling including authentication must be made. Further, latency may be comparatively high so that a user may realize the handover because the layer 3 settings are made only after the wireless equipment 20 has switched over from link to the current access network to link to the target access network.

Documents of relevance for the invention known to the applicant are:
[1] B. Aboba et al., "Extensible Authentication Protocol (EAP) Key Management Framework", draft-ietf-eap-keying-14.txt, June 2006
[2] P. Jayaraman, "PANA Framework", draft-ietf-pana-framework-07, August 2006
[3] Aboba, B. and P. Calhoun, "RADIUS (Remote Authentication Dial In User Service) Support For Extensible Authentication Protocol (EAP)", RFC 3579, September 2003
[4] P. Calhoun et al. "Diameter Base Protocol", RFC 3588, September 2003
[5] R. Hancock et al., "Next Steps in Signaling (NSIS): Framework", RFC 4080, June 2005
[6] R. Braden (ed.), "Resource ReSerVation Protocol (RSVP) - - Version 1 Functional Specification", RFC 2205, September 1997
[7] C. Perkins (dd.), "IP Mobility Support for IPv4", RFC 3344, August 2002
[8] D. Johnson et al., "Mobility Support in IPv6", RFC 3775, June 2004
[9] H. Soliman et. al., "Dual Stack Mobile IPv6 (DSMIPv6) for Hosts and Routers", draft-ietf-mip6-nemo-v4traversal-03.txt, October 2006
[10] K. Leung et al, "Mobility Management using Proxy Mobile IPv4", draft-leung-mip4-proxy-mode-01.txt, June 2006
[11] S. Gundavelli et al., "Proxy Mobile IPv6", draft-sgundave-mip6-proxymip6-00.txt, October 2006
[12] Chowdhury, A. Singh, "Network Based Layer 3 Connectivity and Mobility Management for IPv6", draft-chowdhury-netmip6-01.txt, September 2006
[13] Koodli, R., "Fast Handovers for Mobile IPv6", RFC 4068, July 2005
[14] R. Koodli, C. E. Perkins: "Mobile IPv4 Fast Handovers", draft-koodli-mip4-fmipv4-00.txt, October 2005 (this draft is expired!)
[15] H. Levkowetz (ed.), "The NetLMM Protocol", draft-giaretta-netlmm-dt-protocol-02, October 2006
[16] J. Arkko, V. Devarapalli, F. Dupont, "Using IPsec to Protect Mobile IPv6 Signaling Between Mobile Nodes and Home Agents", RFC 3776, June 2004
[17] X. Fu, H. Karl, and C. Kappler: "QoS-Conditionalized Handoff for Mobile IPv6". In E. Gregori et al. (eds.), Networking 2002, LNCS 2345, pages 721-730. Springer-Verlag, 2002
[18] F. Alfano et al., "Diameter Quality of Service Application", draft-tschofenig-dime-diameter-qos-01.txt, October 20, 2006
[19] S. Faccin, B. Patil, and C. Perkins, "Diameter Mobile IPv6 Application", Internet-Draft: draft-le-aaa-diameter-mobileipv6-03.txt, April 2003 (this draft is expired)
[20] P. Calhoun et al., "Diameter Mobile IPv4 Application", RFC 4004, August 2005
[21] P. Eronen (ed.), "IKEv2 Mobility and Multihoming Protocol (MOBIKE) ", RFC 4555, June 2006
[22] M. Nakhjiri, Y. Ohba, "Pre-Authentication AAA requirements", draft-nakhjiri-preauth-aaa-req-00, September 2006
[23] Y. Ohba et al., "EAP Pre-authentication Problem Statement", draft-ohba-preauth-ps-00, October 2006
[24] European Patent Nr. 06015821.0-1249, filed on 28.07.2006
[25] M. Liebsch and A. Singh (eds.), "Candidate Access Router Discovery (CARD)", RFC 4066, July 2005

It is the object of the invention to provide a handover method, a wireless packet transmitting equipment and a data exchange system enabling a faster and less signalling-intense handover procedure.

This object is accomplished by the features of the independent claims. Dependent claims are directed on preferred embodiments of the invention.

According to the invention, a method for making a handover comprises the step of collecting in the network, while the wireless equipment is linked to the current access network, second information being network layer information about the target access network, preparing handover with reference to said second information, switching the wireless equipment over from a link to the current access network to a link to the target access network, sending them third information from the wireless equipment through the target access network and completing handover with reference to the sent third information.

The second information may be generated in the wireless equipment based on first information collected there in relation to the target access network, particularly from its beacon signal. The second information is sent to the network.

An aspect of the invention is that as said second information layer 3 information (network layer information) about the target access network is sent to the network (core network components) while the wireless equipment is still linked to the current access network. With the given information, the network components can prepare the handover already on the network layer level (mobility handling) while the wireless equipment is still connected to the current access network so that much of it can be done under the old (current) connection so that a wireless equipment does not need to wait for it to be done after the connection to the target access network has been established. This is a kind of layer 3 pre-registration, its finalization only being subject to the wireless equipment reporting on layer 2 level to the target access network.

Further, since layer 3 preparation for the target access is done out of a "trusted" layer 3 situation (namely layer 3 registration to the current access network), authentication after change of the link from the current to the target access network can be reduced, for example may be reduced to only layer 2 authentication checks.

According to the invention, a wireless equipment is provided which has means for establishing a wireless connection to a network through an access network, and managing means for organizing, amongst others, measures for a handover from a current to a target access network. The managing means comprise means for detecting that a handover becomes necessary, means for detecting a target access network while a link to the current network is still established, means for establishing second information about the detected target access network still while connection through the current access network is maintained, the second information being network layer information, means for utilizing the established second information in preparative handover signalling through the current access network to the core network, means for changing over the wireless link from the current to the target access network and means for sending third information to the network through the link to the target access network.

The wireless wireless equipment is designed such that it sends early, i.e. while being linked to the current access network, as said second information network layer information (layer 3 information, the layer designation referring to the OSI-model) to the network so that far-reaching preparations can be made there and after change-over of the link from the current to the target access network, only layer 2 information needs to be sent for identifying the wireless device as the proper one for which the layer 3 preparations were already made.

An overall data conveying system comprising a network and wireless equipment is also part of the invention, network and wireless equipment are designed such that they implement the above mentioned method. The system may incorporate the above mentioned wireless packet transceiving wireless equipment.

The basic routing technology is packet switching. The network protocol may be IPv4 or IPv6; mobility tunnels may be MIPv4, MIPv6 and the like. The access to the core network may comprise gateways, for example for connecting a local router to the network, and the like.

In the following, embodiments of the invention will be described with reference to the drawings, in which
- Fig. 1: is a general diagram showing a packet routing network in which the invention can be applied,
- Fig. 2: is a known handover procedure,
- Fig. 3: is a handover procedure according to the invention,
- Fig. 4: is a detailed description of the procedure according to the invention and
- Fig. 5: is a wireless equipment according to the invention.

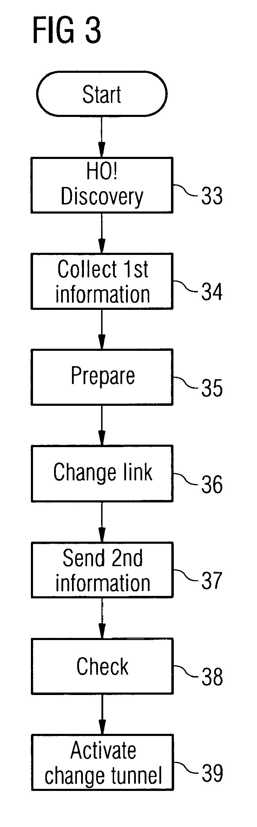

Fig. 3 is the flow of a method for managing a handover according to the invention. After start, in a step 33 the necessity of a handover (HO) from a current to a new network is detected, and a target access network is discovered and identified. These steps will usually be made by the wireless equipment itself. They may, however, also be made in, or be supported by, network components.

Thereafter, in step 34, second information about the target access network 12 is collected in the core network 13. It may be received there from the wireless equipment. This second information includes layer 3 information, particularly information allowing data routing through the target access network to the wireless equipment. This information may include a care-of-address CoA and also the home address HoA. Usually, collection of this layer 3 information in step 35 will be made such that the wireless equipment obtains in the discovery phase for the target accessed network necessary first information about the target access network, allowing, amongst others, establishing of a care-of-address for the future link to the target access network. This care-of-address may be in a known network layer format, such as MIPv4, MIPv6, or the like. This information will be sent as said second information to managing components in the network, particularly in the core network 13, particularly to the home agent 15 which relays it to the AAA server 16.

In step 35, the network components start preparation of the handover with reference to the collected second information. They may make quality of service settings, as required and technically possible. This step does not necessarily require the collected second information, but may in many circumstances be useful, particularly when access networks are different so that it is not a matter of course that the target access network will provide the same service as the current access network.

Further, besides quality of service activities, AAA activities may be taken, particularly as a following step (authentication, authorization, accounting). This will be made with reference to the collected second information, particularly with reference to the care-of-address of the wireless equipment in the target access network and possibly with respect to the home address. Through this, a layer 3 connection of the wireless equipment to the network 10 is prepared, although presently not yet used.

Meanwhile, the regular data flow, for example from and to applications running on the wireless equipment 20, is still passing through the current access network. But while the users data flow still runs through the current access network 11, the preparations for directing it through the target access network 12 are made. These preparations include the quality of service signalling and the AAA signalling, as mentioned above. Further, they include preparation of changing routing of packets from the core network 13 towards the target access network 12 rather then to the current network 11.

In step 36, the wireless equipment 20 performs the change of its radio link from the current access network 11 to the target access network 12. From that time on, the logical link to the base station 11b of the first access network 11 is terminated, and the logical link to the base station 12b of the target access network 12 is established. This may be seen as a link layer (layer 2) measure since the link through which data are transported is changed.

Once the new link to the target access network 12 is established, the wireless equipment 20 sends in step 37 a third information through the target access network 12 to the core network 13. This may be a layer 2 attachment, and thus compliant to the particular layer 2 technology employed. It may be suitable for identifying the wireless equipment and may comprise the MAC address of the wireless equipment 20.

Based on said third information, in step 38 the wireless equipment can be identified, and it can be particularly checked whether it is the equipment for which the handover preparations in the earlier steps were made.

If a match is found, then in step 39 the already prepared connection on layer 3 level through the third access network will be started to be used, and the tunnel formerly reaching to or through the current access network will be changed to pass through or reach the target access network, and the wireless equipment 20 will receive data flow under its care-of-address through the target access network. Handover is then completed.

In case of Client MIP a tunnel may be established through the target access network between the user equipment 20 and home agent 15 for properly routing data. Alternatively, in the case that Proxy MIP is employed the data tunnel may reach from the home agent 15 to the access router 11a, 12a in the source/target access network (which then acts as the Proxy MIP Agent).

The AAA checks were already made earlier in the pre-registration step 36 prior to switch over of the wireless equipment 20 so that nothing is required insofar. Accordingly, after the wireless equipment 20 has changed its link from the current to the target access network, only few signalling is required, and accordingly the user will less likely recognize effects of the handover, such as blocked data flow, connection, interruption or the like.

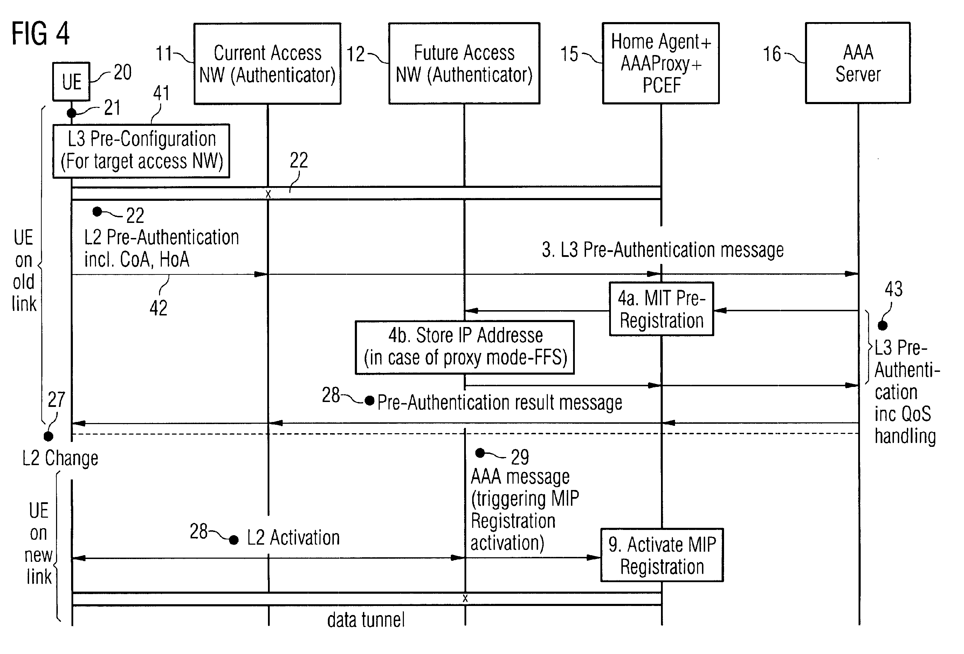

Signalling as regards authentication and authorization can be saved because preparations for the new data routing (towards the target access network) can be made out of a network layer trusted situation / environment (namely when the wireless equipment was connected through the current access network. Fig. 4 shows a diagram similar to that of Fig.2, where, however, modifications according to the invention are shown. Steps with same reference numerals indicate same or similar steps as in Fig.2. Particularly, in same or similar manner as in Fig.2, the necessity for a handover is determined, a target access network is discovered, and information about the target access network is collected. However, according to the invention, prior to switch over the link from the current to the target access network, network layer pre-configuration for the intended target access network takes place. This is symbolized by step 41 in Fig. 4. Here, network layer information is established in view of the target access network. This is second information suitable for data routing towards the target access network, and may be or include a care-of-address.

In step 42, this information is communicated to the home agent 15 from which it is relayed to the AAA server 16. The sent information may also include the home address of the wireless equipment 20. This transmission is made through the current access network to which the wireless equipment is still linked.

In cooperation of AAA server 16, home agent 15 and target access network 12, the signalling for quality of service negotiations, AAA and data routing change preparation can be made. Particularly, with reference to the collected second information, the AAA server 16 can check for authorization and the like and can initiate QoS measures. Further, it can prepare settings for changing data routing such that packets are no longer sent to the current access network, but rather to the target access network. Altogether, this leads to a prepared authentication on network layer level, called "pre-authentication". The related signalings are shown with reference to numeral 43. The result of this all may be communicated to the wireless equipment 20 still through the current access network (message 44).

Such a report message may be a trigger or may at least be a prerequisite for changing, on the side of the wireless equipment, the link from the current access network 11 to the target access network 12 in step 27. After this, an activation on link layer level follows in step 28. The situation, however, is different from the former one (Fig.2), because most layer 3 preparations could already be made because the layer 3 information was already sent earlier (under the link through the current access network) to the network 10. The pre-registration took already place, and the activation message 28 serves only to identify the device as that for which the preparations were made. Accordingly, only the layer 3 pre-registration made earlier needs to be activated so that from then on the wireless equipment 20 can receive the data through the target access network 12.

The activation of the pre-registration may particularly include the sending of an AAA relevant message to the home agent, as indicated in step 45, which triggers the path switching by changing the routing away from the current access network towards the target access network.

According to the invention, in an early stage of handover, particularly before switching over the link of the wireless equipment from the current to the target access network, high level information about the target access network is made available to network resources, particularly to home agent and AAA server, to perform steps for accomplishing pre-registration. This may require slight changes in current authentication protocols because more information, particularly HoA ands CoA, than required so far is sent from the wireless equipment 20 towards the core network 13. And the network components, particularly home agent 15, AAA server 16, and possibly other management servers or resources must be changed to adapt to the changed procedure, particularly for rendering the above-mentioned pre-registration.

The invention renders a pre-registration prior to changing the link of the wireless equipment from the current to the target access network. This may be called "MIP pre-registration" because most likely the protocol under which this is accomplished is mobile internet protocol, i.e. a layer 3 protocol in the OSI model.

According to the invention, alternative pre-registrations for alternative target access networks can be tried if an initially tried pre-registration turns out to be not feasible for some reasons, particularly in view of AAA requirements that can be checked in view of the early submitted layer 3 information (step 42 in Fig.4). Should it turn out that for some reasons the user equipment is not permitted to use the target access network, another access network can be tried if available, or some other policies may be followed, depending on earlier settings.

As far as the wireless equipment 20 utilizes a client based mobility scheme (e.g. MIPv6 or MIPv4 with co-located CoA), the respective tunnels reach up to the client. If, however, a network based mobility scheme is used, the tunnel may reach only from the home agent 15 to the access router 11a, 12a in the access network (current or target, depending on progress of the handover). The AAA signalling messages for pre-authentication are then to be changed accordingly.

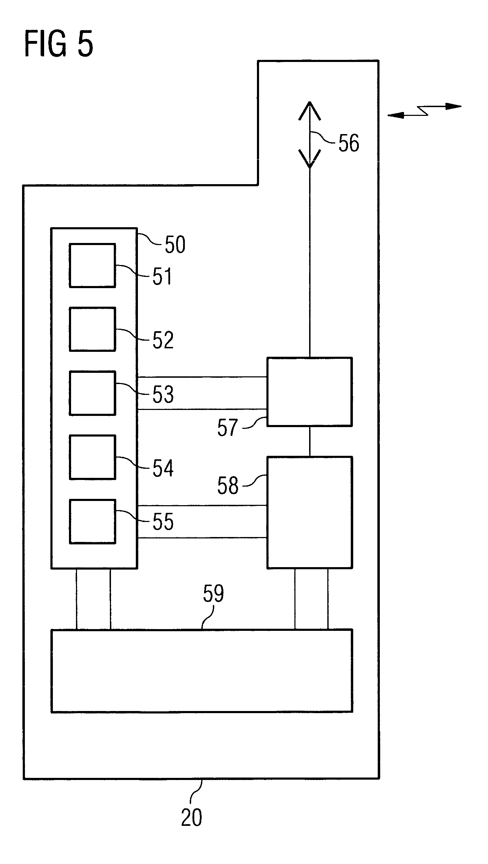

Fig. 5 shows schematically a wireless equipment 20 in which the invention is implemented. The wireless equipment may be a client such as a PDA or a laptop with a wireless interface. 56 symbolizes the antenna, 57 circuitry on the analog side for rendering connectivity, 58 a controller between an application 59 and the analogue circuitry 57. 50 symbolizes in general a manager that manages various tasks, amongst them handover according to the invention.

The managing means 50 comprises a detecting means 51 for detecting the necessity of making a handover (for example by monitoring signal strength in the current link) and for discovering a target access network. The managing means 50 may further comprise a determining means 52 for determining network layer information about the target access network 12. It may refer to first information received from the target access network through its beacon signals, and may further refer to internal information in the wireless equipment 20.

Determining means 52 may prepare second information on network layer level, particularly a care-of-address CoA in view of the home address HoA of the wireless equipment 20 and in view of information gained from the target access network.

Means 53 are provided for triggering the sending of the detected second information through the link to the current access network 12 towards the network and particularly components 15, 16 in the core network 13.

Further, means 54 are provided for triggering changing over the wireless link from the current access network to the target access network. They may be sensitive to feedback messages from the network, such as 44 in fig. 4.

Sending means 53 is also adapted to send, through the new link to the target access network, information for layer 2 activation of the new link to the target access network, which in turn may trigger on the side of the target access network 12 an AAA message sent out to the home agent 15 to activate the layer 3 registration (MIP registration).

Accordingly, the wireless equipment as schematically shown in Fig.5 is adapted to implement the method steps necessary on the side of the wireless equipment for implementing the invention.

To some extent, steps said so far to be made by or in the wireless equipment may also be performed in the network. For example, necessity for initiating a handover and likewise target access network discovery may, depending on technical feasibility, also be made within the network 10, and particularly within the core network 13, perhaps also in view of information gained from the current access network and possible target access networks. Then, also the second information may be detected and assembled within the network without requiring action from the wireless equipment 20. Use of the thus generated second information within the core network will, however, be the same as described above.

Also part of the invention is a core network component implementing the functions described above in the core network for contributing to the mentioned method for making a handover of a wireless packet transceiving equipment from a current to a target access network. Particularly, home agent 15 and/or AAA server 16 may have adaptations enabling them to contributing to the mentioned hand-over.

## Claims

1. A method for making a handover of a wireless packet transceiving equipment from a current to a target access network of a packet routing core network, comprising
(a) the following steps performed while the equipment is linked to the current access network:
(a0) receiving first information from the target access network, particularly network layer information in the form of an IP address prefix, and creating second information, particularly including a specific instance of IP address from said first information, by the wireless equipment,
(a1) collecting in the network from the wireless equipment said second information, the second information being network layer information,
(a2) preparing in advance in the network handover with reference to the second information and communicating to the mobile the success of this preparation,
(b) the step of switching over the link of the wireless equipment from the current to the target access network,
(c) the following step performed while the equipment is linked to the target access network:
(c1) sending third information from the equipment to the target access network, and
(c2) completing on the side of the target access network and the core network handover with reference to the third information.

2. The method of claim 1 wherein step (a1) includes one or more of the following features:
the second information comprises an information allowing or contributing to packet routing between the core network and the target access network, particularly a care-of-address (CoA).

3. The method of claim 1 or 2, wherein step (a2) includes one or more of the following features:
a step of setting or checking or requesting or negotiating quality of service between the wireless equipment and the target access network,
a step of reserving network resources in view of quality of service requirements,
a step of making accounting and/or authentification and/or authorization settings and/or checks for the connection between the wireless equipment and the target access network,
a step of notifying the wireless equipment of results of handover preparation.

4. The method of one or more of the preceding claims, wherein step (b) includes one or more of the following features:
checking feedback from the network prior to switching over the link.

5. The method of one or more of the preceding claims, wherein step (c1) comprises one or more of the following features:
the third information comprises a data link layer information, particularly information allowing equipment identification and/or security checks, particularly a MAC address
sending AAA information from the target access network to the core network.

6. The method of one or more of the preceding claims, wherein step (c2) comprises one or more of the following features:
changing routing of packets towards the target access network,
allocating network resources, particularly reserved network resources, to the link through the target access network.

7. The method according to one or more of the preceding claims, wherein fourth information relevant for authentication and/or authorization and/or accounting is collected while the equipment is linked to the current access network, preferably in conjunction with the second information.

8. The method of one or more of the preceding claims, wherein the mobility scheme is either client based or network based.

9. A wireless packet transceiving equipment (20), comprising
means (57) for establishing a wireless connection to a network (10) comprising a packet-routing core network (13) through a packet routing access network (11, 12), managing means (50) for organizing measures for a hand-over from a current (11) to a target access network (12), said managing means comprising
means (51) for detecting a target access network while connection through the current access network is established,
means (52) for establishing second information about the detected target access network while connection through the current access network is established, the second information being network layer information,
means (53) for sending the detected second information to the network through the connection to the current access network,
means (54) for changing over the wireless connection from the current access network to the target access network, and
means (53) for sending third information to the network through the connection to the target access network.

10. The wireless packet transceiving equipment of claim 9, comprising determining means (52) for receiving first information from the target access network, particularly network layer information in the form of an IP address prefix, preferably from the beacon signal of the target access network.

11. The wireless packet transceiving equipment of claim 9 or 10, adapted to participating in the method of one or more of the claims 1 to 8.

12. A data exchange system comprising a wireless packet transceiving equipment (20) and network (10 - 18) for implementing the method according to one or more of the claims 1 to 8.

13. A core network component adapted to participate in a method according to one of the claims 1 to 8.

14. The component of claim 13, being a home agent (15) or an AAA server (16).

15. The component of claim 14, wherein a home agent (15) is adapted to pre-establish, in accordance with said second information, a tunnel towards the future access network while the equipment is linked to the current access network.
